# EUROPEAN PATENT APPLICATION

(11) **EP 4 428 061 A1**
(43) Date of publication of application: **11.09.2024**
(21) Application number: 24382253.3
(22) Date of filing: 08.03.2024
(51) Int. Cl.: B65G 1/02, B65G 1/04

(54) **MODULAR SYSTEM FOR STORAGE OF LONG ELONGATED LOADS**

(30) Priority: 09.03.2023 ES 202330194
(71) Applicant: Sinase Aceros y Servicios S.A., 31500 Tudela (Navarra) (ES)
(72) Inventor: SERRANO GARCÍA, Iker, 31500 TUDELA (Navarra) (ES)
(74) Representative: Herrero & Asociados, S.L.

(57) **Abstract**

Load storage system for elongated elements (A) comprising at least two gantries (1), wherein each gantry (1) is formed by at least two vertical supports (2) and at least one beam (3) supported by said at least two vertical supports (2), such that between two adjacent gantries (1) at least one load storage space is formed, such that each beam (3) defines a storage level, wherein the system comprises:
- a base consisting of at least two open profiles (4) with the outer face of their web (4') resting on a support surface (B), so that the vertical supports (2) rest on the said open profiles (4), and
- a support piece (5), which can be anchored to the vertical supports (2) and in turn supported on the inner face of the web (4') of the open profiles (4).

## Description

### TECHNICAL FIELD OF THE INVENTION

The present invention refers to a modular system for the storage of loads of elongated elements, which has application in the logistics industry, and more specifically in the field of storage systems, allowing to improve the efficiency of the current systems, with a considerable reduction of the assembly time, by allowing to pass from the current fixed storage systems, in which the elements were welded at the assembly location, to a completely modular system that can be disassembled to move it to a new location, grow in height, expand in length, add trays to carry material, divide the openings into several parts to allow more than one material to be stored in a single location and with a modular system that offers multiple possibilities in a simple and quick way.

### BACKGROUND TO THE INVENTION

Nowadays storage systems using metal profiles are well known, which are used in particular for the storage of long elements such as pipes.

These systems, an example of which can be found in Spanish patent application no. 200302106, consist of a plurality of gantries whose elements are welded in their final location according to the configuration chosen by their user.

This method of assembly, apart from being time-consuming and costly, due to the need to move welding equipment, does not offer any possibility of changing the configuration of the system once it has been assembled, depending on the user's needs and any changes that may occur.

### DESCRIPTION OF THE INVENTION

The present invention relates to a modular system for storing loads of elongated elements as defined in claim 1 of the present application.

The system allows the dimensions of the system to be open and easily reconfigured, allowing for maximum use of space and a combination of both dimensions and anchorages.

The system that the invention proposes comprises at least two gantries, where each gantry is formed by at least two vertical supports and at least one beam supported on said at least two vertical supports, such that between two contiguous gantries at least one load storage space is formed, such that each beam defines a storage level.

According to the invention, the system comprises a base formed by at least two open profiles with the outer face of the web resting on a support surface (B), so that the vertical supports rest on the said open profiles.

The system also includes a support piece, which can be anchored to the vertical supports and can rest on the inner face of the web of the open profiles.

With respect to the state of the art, the main difference over time is the change from a fixed storage system that was carried out by welding at the customer's premises, to a completely modular system, which allows us to dismantle it to move it to a new location, make it grow in height, extend it in length, add trays to carry material, divide the openings into several parts to allow the storage of more than one material in a single location...

### DESCRIPTION OF THE DRAWINGS

To complement the description being made and in order to assist in a better understanding of the features of the invention, in accordance with a preferred example of a practical embodiment thereof, a set of drawings is attached hereto as an integral part of the said description, in which the following is illustratively and non-limitingly depicted:

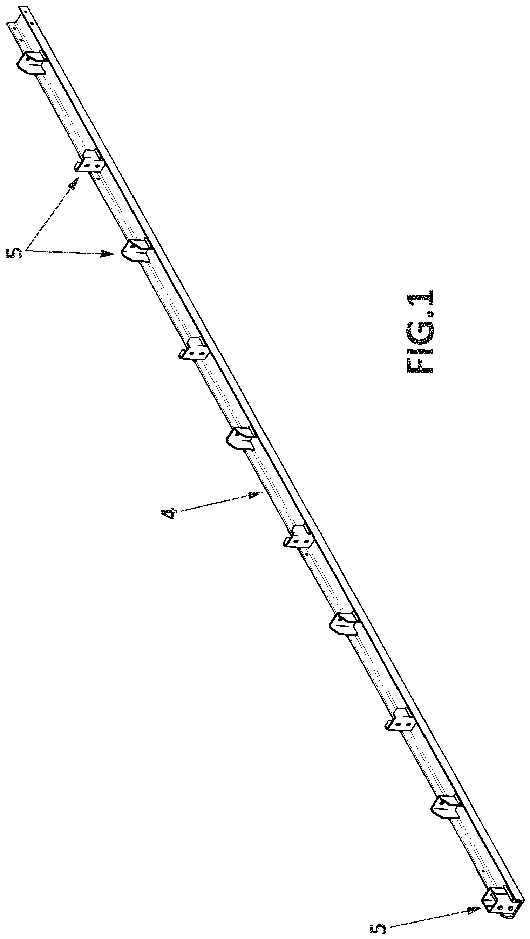

Figure 1.- Shows a schematic perspective view of one of the open profiles that constitute the base of the gantries and on which the support pieces are arranged.

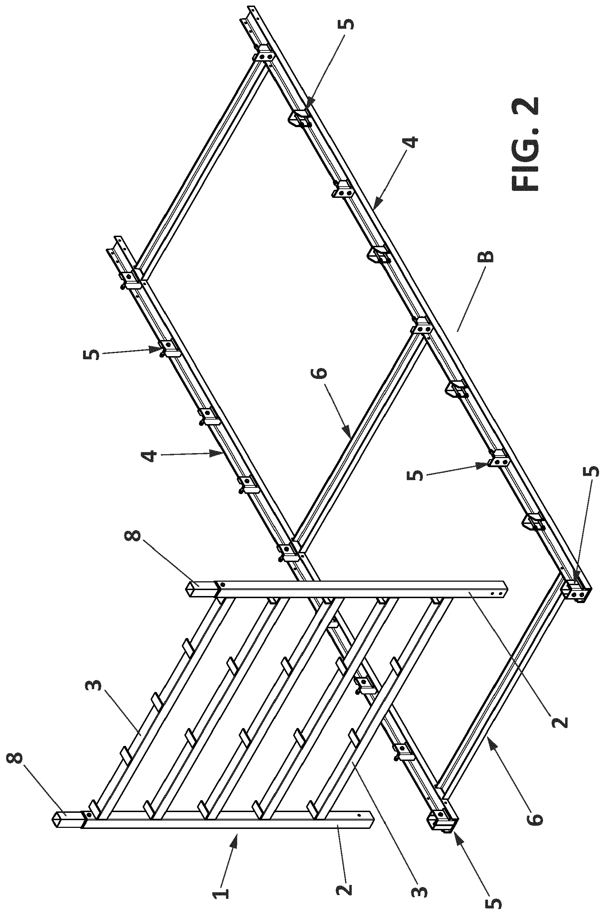

Figure 2.- Shows a schematic exploded view representing a sequential moment of the assembly, where two bases and an end gantry can be seen.

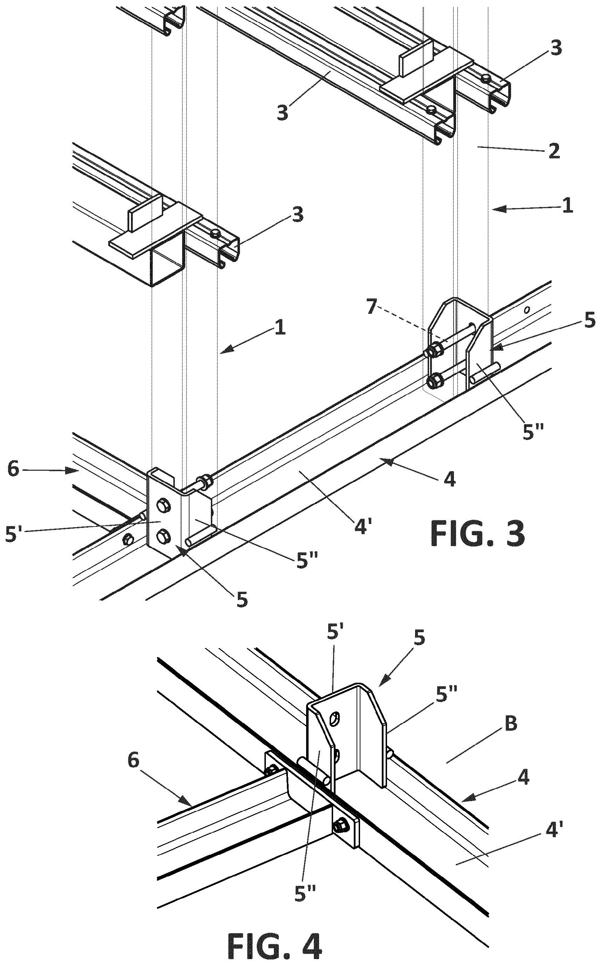

Figure 3.- Shows a detail in which the means of rapid fastening of the vertical supports of the gantries to the support piece can be seen, as well as the connection of the gantry beams to the vertical supports, which have been shown in translucent form for a better appreciation of these means of rapid fastening.
Figure 4.- Shows a detail of the arrangement of a support piece in the open profile that serves as a base, as well as one of the cross beams.

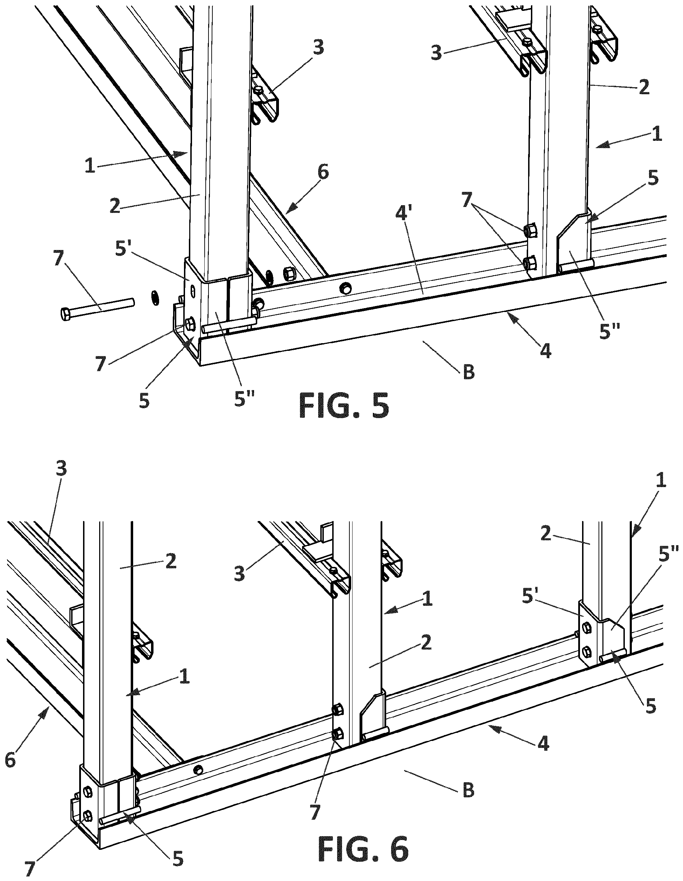

Figure 5.- Shows a detail of the connection between an end portal frame and the open profile by means of a support piece in a closed box.
Figure 6.- Shows an enlarged perspective view of the detail shown in figure 5.
Figure 7.- Shows a perspective view of the system of the invention in which the closed profiles that allow the connection in different sections of the vertical supports can be seen.
Figure 8.- Shows a detail of the closed profiles shown in figure 7.
Figure 9.- Shows a perspective view of the system shown in figure 7 at a more advanced stage of assembly with the sections of the vertical supports connected by means of the closed profiles.
Figure 10.- Shows a detail of the connection of the second horizontal open profile with the vertical supports.
Figure 11.- Shows a perspective view of the upper platform of the system after completion of assembly.
Figure 12.- Shows a perspective view of the open profiles that constitute the base of a variant of realisation of the system detailing the system of the invention in which each gantry has three anchorage points.
Figure 13.- Shows a perspective view of the complete system of the variant shown in figure 12.

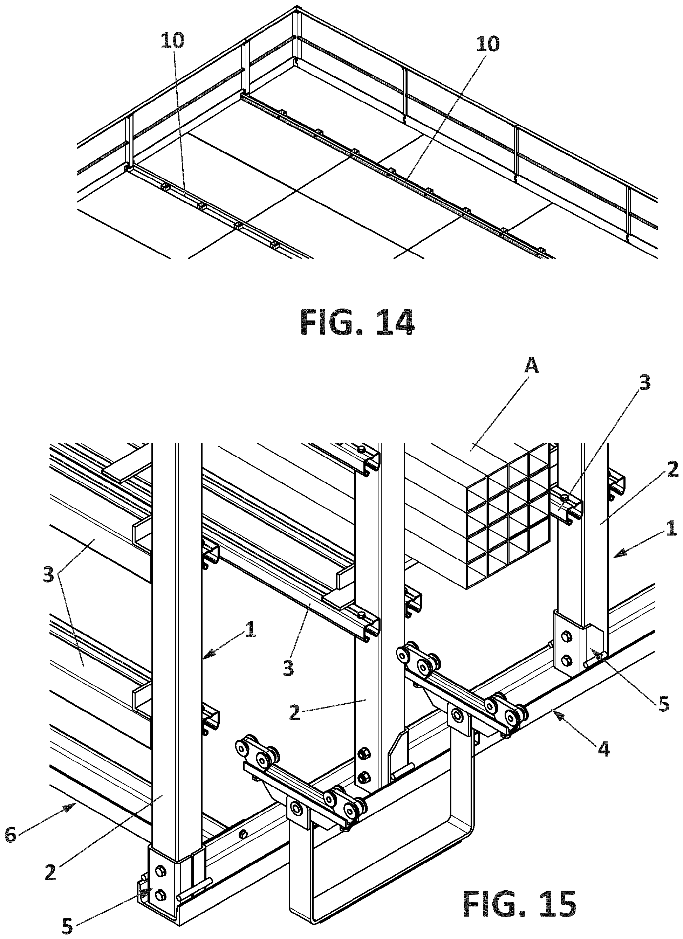

Figure 14.- Shows a perspective view of the upper platform.
Figure 15.- Shows a detail of a mobile trolley for the arrangement of elongated elements.

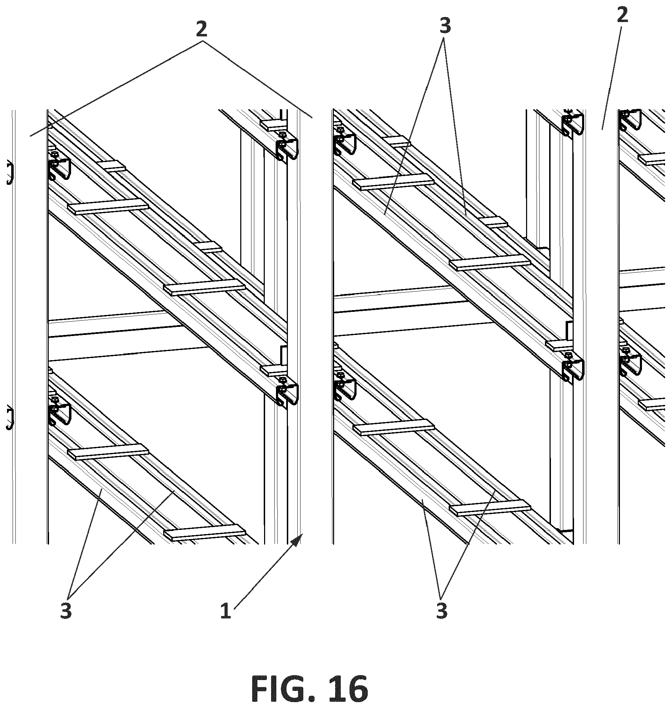

Figure 16.- Shows a detail in which the arrangement of elongated elements in the system of the invention can be appreciated.

### PREFERRED EMBODIMENT OF THE INVENTION

In view of the figures shown, it can be seen that in one of the possible embodiments of the invention, the load storage system for elongated elements (A) proposed by the invention comprises at least two gantries (1), where each gantry (1) is formed by at least two vertical supports (2) and at least one beam (3) supported by said at least two vertical supports (2), such that between two contiguous gantries (1) at least one load storage space is formed, such that each beam (3) defines a storage level.

The system also comprises:
- a base consisting of at least two open profiles (4) with the outer face of their web (4') resting on a support surface (B), so that the vertical supports (2) rest on the said open profiles (4), and
- a support piece (5), which can be anchored to the vertical supports (2) and in turn supported on the inner face of the web (4') of the open profiles (4).

For increased safety and robustness, the open profiles (4) are to be anchored to the supporting surface (B), if necessary only.

In the same way, and depending on the total size of the system, it is envisaged that at least two adjacent open profiles (4) will be joined together by anchoring them to at least one brace beam (6).

According to a preferred embodiment, the open profiles (4) are standard metal U-profiles.

Preferably, the support pieces (5) are open U-shaped profiles in which the plane of their web (5') is arranged perpendicular to the support surface (B).

In this sense, it is envisaged that the support pieces (5) corresponding to intermediate frames (1) will have the wings (5") at their free end trimmed, while the support pieces (5) corresponding to the end frames (1) will take the form of two open profiles arranged in a closed box.

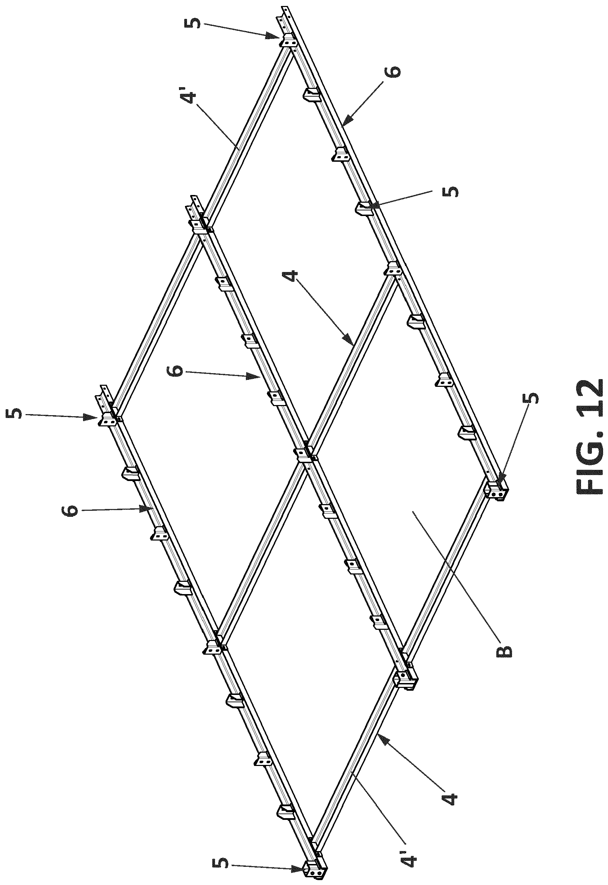

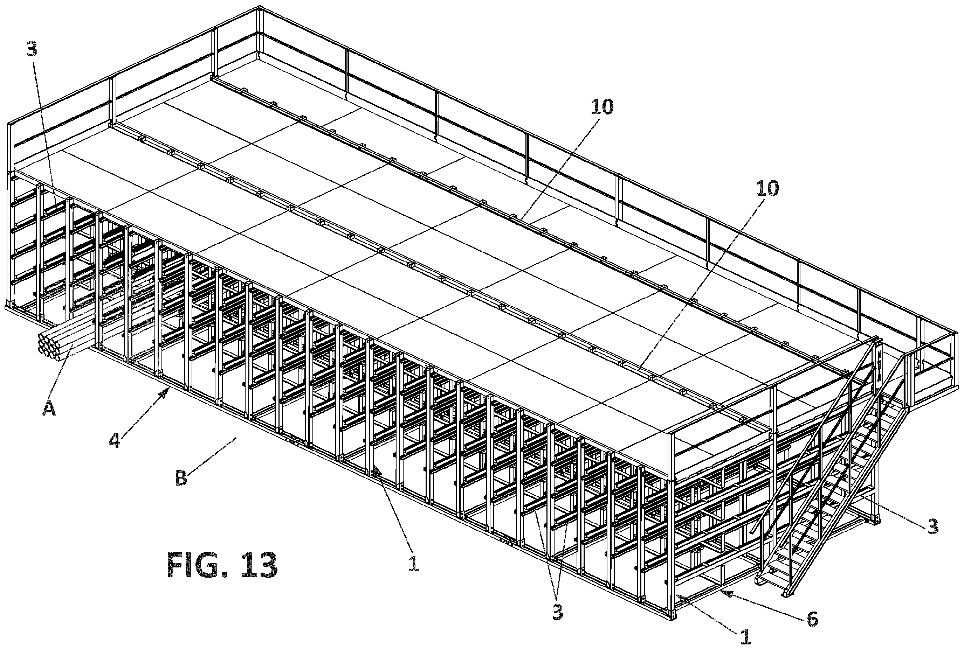

As shown in the embodiments of figures 12 and 13, a variant of the system is that each gantry (1) is made up of three vertical supports (2).

Preferably, each support piece (5) is anchored to a vertical support (2) by means of quick fasteners (7), which may comprise pins, bolts, rivets, and screws.

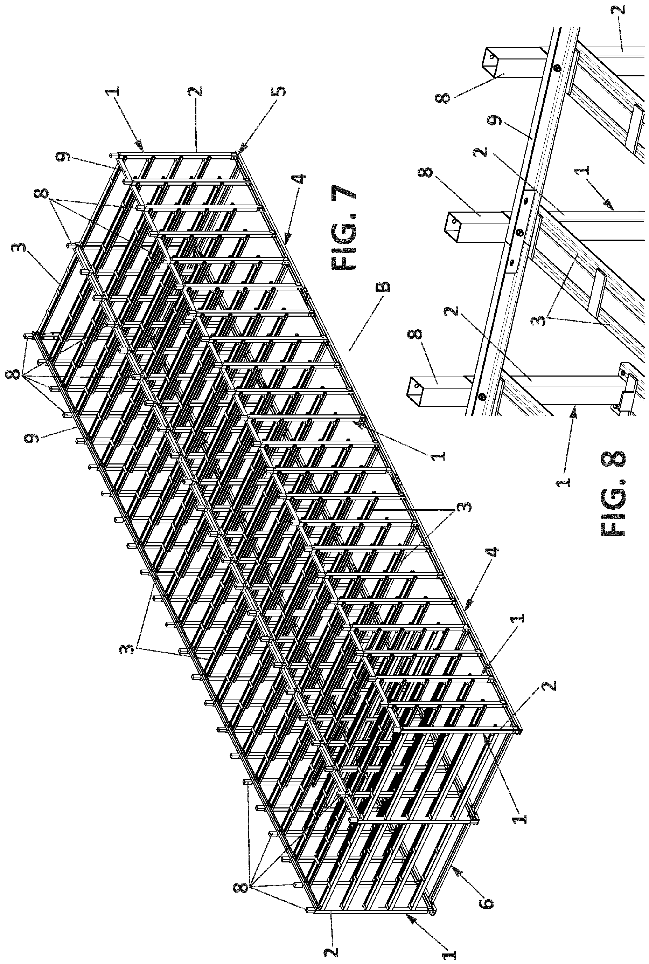

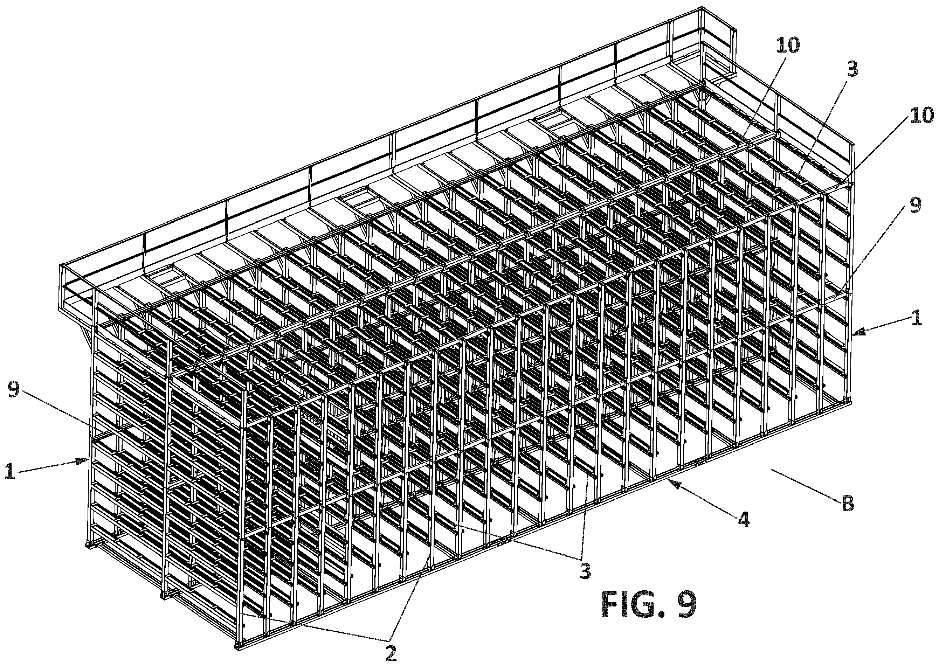

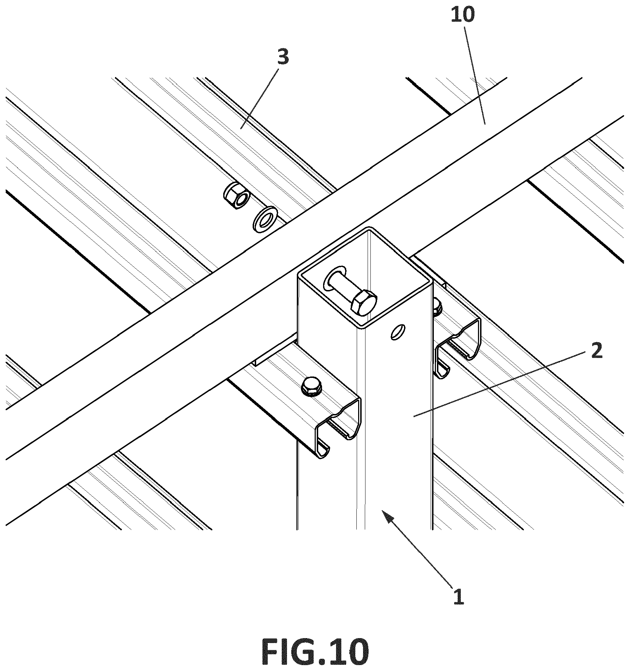

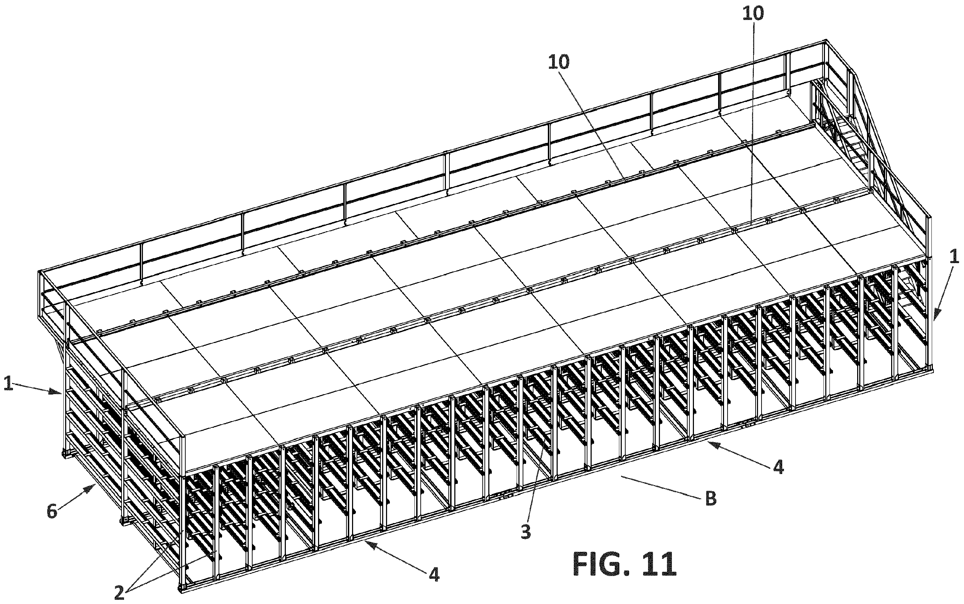

As shown in figures 7 to 11, it is envisaged that each vertical support (2) comprises at least two sections that are connected by means of a closed profile (8) that is internally aligned with respect to the vertical supports (2) for the correct load transmission and is fastened by means of screws or bolts.

It is also envisaged that the system comprises at least one horizontal open profile (9) for bracing the lower section of the vertical supports (2), so that the fastening by means of screws or bolts is made between the closed profiles (8), the lower sections of the vertical supports (2) and the horizontal open profile (9) itself, bracing the lower structure and serving as support for the package (A) placed immediately above.

Finally, the upper free ends of the vertical supports (2) are braced by means of at least a second horizontal open profile (10) that is fastened by means of screws or bolts to the vertical support (2) itself, bracing the structure and serving as a support element for the packages (A) placed in the upper warehouse or platform.

In view of this description and set of figures, the person skilled in the art will understand that the embodiments of the invention that have been described can be combined in multiple ways within the subject matter of the invention. The invention has been described according to some preferred embodiments thereof, but it will be apparent to the person skilled in the art that multiple variations can be introduced into such preferred embodiments without exceeding the claimed subject matter of the invention.

## Claims

1. Load storage system for elongated elements (A) comprising at least two gantries (1), where each gantry (1) is formed by at least two vertical supports (2) and at least one beam (3) supported on said at least two vertical supports (2), such that between two contiguous gantries (1) at least one load storage space is formed, so that each beam (3) defines a storage level,
**characterised in that** it comprises:
- a base consisting of at least two open profiles (4) with the outer face of their web (4') resting on a support surface (B), so that the vertical supports (2) rest on the said open profiles (4), and
- a support piece (5), which can be anchored to the vertical supports (2) and in turn supported on the inner face of the web (4') of the open profiles (4).

2. System according to claim 1, wherein the open profiles (4) are anchored to the support surface (B).

3. System according to any of the previous claims, in which at least two contiguous open profiles (4) are joined together by means of their anchorage with at least one brace beam (6).

4. System according to any of the previous claims, in which the open profiles (4) are standard metal U-profiles.

5. System according to any of the previous claims, in which the support pieces (5) are open U-shaped profiles in which the plane of their web (5') is arranged perpendicular to the support surface (B).

6. System according to claim 5, in which the support pieces (5) corresponding to intermediate frames (1) have the wings (5") at their free end trimmed, while the support pieces (5) corresponding to the end frames (1) are materialised as two open profiles arranged in a closed box.

7. System according to any of the previous claims, in which each gantry (1) is formed by three vertical supports (2).

8. System according to any of the previous claims, in which each support piece (5) is anchored to a vertical support (2) by means of quick fasteners (7).

9. System according to claim 8, wherein the quick fastening means (7) comprise pins.

10. System according to claim 8, wherein the quick fastening means (7) comprise bolts.

11. System according to claim 8, wherein the quick fastening means (7) comprise rivets.

12. System according to claim 8, wherein the quick fastening means (7) comprise screws.

13. System according to any of the previous claims, in which each vertical support (2) comprises at least two sections that are connected by means of a closed profile (8) that is internally aligned with respect to the vertical supports (2) for the correct transmission of the load and which is fastened by means of screws or bolts.

14. System according to claim 13, comprising at least one horizontal open profile (9) for bracing the lower section of the vertical supports (2), so that the fastening by means of screws or bolts is carried out between the closed profiles (8), the lower sections of the vertical supports (2) and the horizontal open profile (9) itself, bracing the lower structure.

15. System according to any of the previous claims, in which the upper free ends of the vertical supports (2) are braced by means of at least a second horizontal open profile (10) that are fastened by means of screws or bolts to the vertical support (2) itself.
